# EUROPÄISCHE PATENTANMELDUNG

(11) **EP 0 528 206 A2**
(43) Veröffentlichungstag der Anmeldung: **24.02.1993**
(21) Anmeldenummer: 92112746.0
(22) Anmeldetag: 25.07.1992
(51) Int. Cl.: H04L 12/64, H04Q 11/04

(54) **Hybrider Koppelnetzbaustein**

(30) Priorität: 17.08.1991 DE 4127244
(71) Anmelder: Alcatel SEL Aktiengesellschaft, D-70435 Stuttgart (DE)
(72) Erfinder: Weik, Hartmut, W-7000 Stuttgart 1 (DE)
(74) Vertreter: Pechhold, Eberhard, Dipl.-Phys.

(57) **Zusammenfassung**

Es wird ein hybrider Koppelnetzbaustein (K) mit einem Synchron-Koppelelement (CS) und einem Asynchron-Koppelelement (PS) angegeben, der es ermöglicht, die Übertragungskapazität einer Paketvermittlung auch dann optimal zu nutzen, wenn neben einem den größten Teil der Übertragungskapazität in Anspruch nehmenden Aufkommen an asynchron zu vermittelnden Paketen wenige Pakete synchron zu vermitteln sind und der Anteil dieser Pakete eine Übertragungskapazität kleiner als 2 Mbit/s beansprucht. Im Koppelnetzbaustein werden aus ursprünglichen Rahmen kürzere Unterrahmen mit Subpaketen gebildet, von denen, sobald ein synchron zu vermittelndes Paket erkannt wird, vorgegebene Zeitschlitze für die Dauer dieses Paketes für Information aus diesem Paket reserviert und über das Synchronkoppelelement druchgeschaltet werden. Zur Signalisierung der synchronen Durchschaltung wird zwischen eingangsseitigem Demultiplexer (DM) und Synchron-Koppelelement (CS) und zwischen Synchron-Koppelelement und ausgangsseitigem Multiplexer (M) jeweils eine besondere Steuerleitung (SL) benötigt.

## Beschreibung

Die Erfindung betrifft einen Koppelnetzbaustein nach dem Oberbegriff des Patentanspruchs 1.

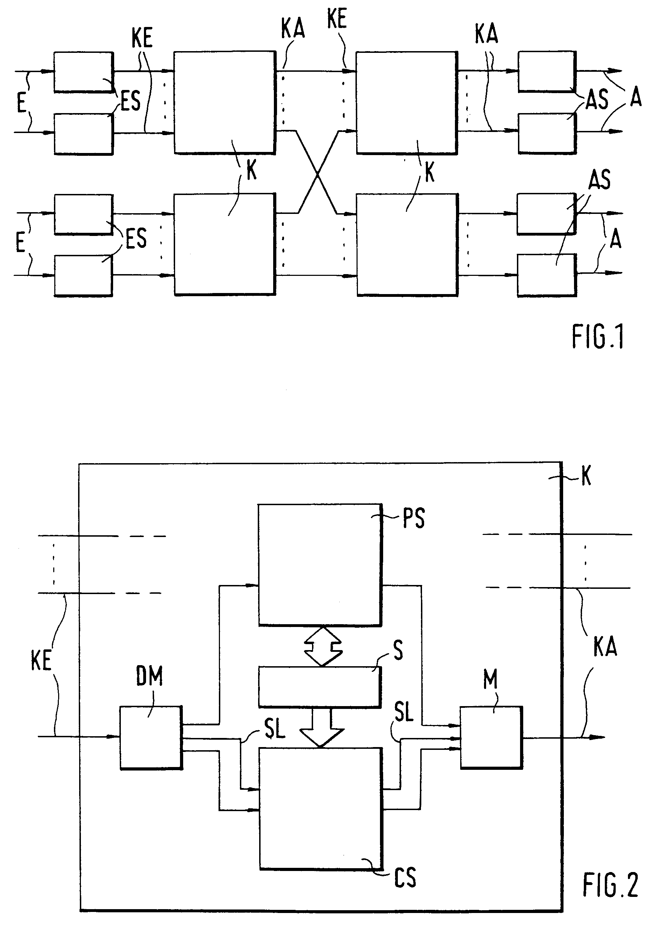

Ein solcher Koppelnetzbaustein ist aus der DE-Offenlegungsschrift 37 42 939, z.B. aus den Fig. 4 und 5 und der zugehörigen Beschreibung bekannt. Die Einrichtung der Fig. 4 wird dort als einfache Vermittlungseinrichtung bezeichnet und enthält vier Koppeleinrichtungen, die als hybride Koppelnetzbausteine realisiert sein können. Sie ist in der Lage, die im Zusammenhang mit den Fig. 1 bis 3 der oben genannten DE-OS beschriebenen, eine Folge von Sub-Paketen enthaltenden Unterrahmen zu vermitteln. Die Sub-Pakete der Unterrahmen enthalten an bestimmten Byteplätzen (in bestimmten Zeitschlitzen) Teile von synchron zu vermittelnden Paketen, welche zur Vermittlung einem Synchron-Koppelelement in einer der Koppeleinrichtungen zugeführt werden müssen.

Der Koppelnetzbaustein selbst ist in Fig. 5 dargestellt. Er besteht aus einem Synchron- und einem Asynchron-Koppelelement, die von einer Steuerschaltung gesteuert werden. Den Eingang des Koppelnetzbausteins bilden bis zu 16 Demultiplexer, den Ausgang bis zu 16 Multiplexer. Die Einstellung der Steuerschaltung erfolgt durch Steuerpakete über das Asynchron-Koppelelement und einen besonderen Steuerbus.

Im oben genannten Stand der Technik geht die Steuerung des Kopppelnetzbausteins davon aus, daß nach Aufbau einer synchronen Verbindung jeweils an denselben Byteplätzen (Zeitschlitzen) in den Sub-Paketen der Unterrahmen Teile synchron zu vermittelnder Pakete erscheinen und durchgeschaltet werden. Dabei sind die in Fig. 5 der oben genannten DE-OS dargestellten, eingangsseitigen Demultiplexer und ausgangsseitigen Multiplexer für die Zeit, während der eine solche Verbindung besteht, fest eingestellt. Liegt die Übertragungsrate der synchronen Verbindung so niedrig, daß sie weniger als 1 Byte pro Sub-Paket umfaßt, so wird die Übertragungskapazität (ca. 2 Mbit/s) der zur Verfügung gestellten Verbindung nicht ausgenutzt. Die überschüssige Übertragungskapazität muß vielmehr bis zur Auslösung der Verbindung mit Stopfbits aufgefüllt werden, die keine Nutzinformation tragen.

Aufgabe der Erfindung ist es, einen Koppelnetzbaustein der im Oberbegriff des Patentanspruchs 1 beschriebenen Art anzugeben, der Verbindungen mit geringer Übertragungsrate synchron durchschalten kann und dabei keine ungenutzte Übertragungskapazität in Anspruch nimmt.

Diese Aufgabe wird durch die im kennzeichnenden Teil des Patentanspruchs 1 angegebenen Merkmale gelöst.

In dem erfindungsgemäßen Koppelnetzbaustein wird die synchrone Durchschaltung abhängig vom Anstehen eines synchron zu vermittelnden Paketes aktiviert und nur so lange aufrechterhalten, wie Sub-Pakete zur Abarbeitung dieses Paketes zu bilden sind. Damit ist sichergestellt, daß nach Abarbeitung eines synchron zu vermittelnden Paketes die für synchrone Übertragung reservierten Byteplätze (Zeitschlitze) in den Sub-Paketen der Unterrahmen wieder für asynchron zu vermittelnden Paketteile verwendet werden können, solange kein neues synchron zu vermittelndes Paket eintrifft.

Anhand von zwei Figuren soll nun ein Ausführungsbeispiel des Koppelnetzbausteins nach der Erfindung beschrieben und seine Funktion erklärt werden.
- Fig. 1: zeigt schematisch eine Vermittlungsstelle mit mehreren Koppelnetzbausteinen.
- Fig. 2: zeigt einen Koppelbaustein nach der Erfindung.

Fig. 1 zeigt eine Vermittlungsstelle mit Koppelnetzbausteinen K, die hier in zwei Stufen angeordnet sind und in der ersten Stufe Eingangssortierer ES vorgeschaltet, in der zweiten Stufe Ausgangssortierer AS nachgeschaltet haben.

Den Eingangssortierern ES werden sowohl asynchron zu vermittelnde Pakete (ATM-Pakete) als auch synchron zu vermittelnde Pakete (STM-Pakete) über Eingangsleitungen E zugeführt.

Eine in Fig. 1 nicht dargestellte Rahmenumwandlungseinheit in jedem Eingangssortierer wandelt den Datenstrom der in Rahmen von z.B. 70 Paketlängen angeordneten, durch Unterscheidungsbits als synchron oder asynchron zu vermitteln gekennzeichneten Pakete, wie in der eingangs genannten DE-OS beschrieben, in einen in kürzere Unterrahmen unterteilten Datenstrom um und zwar derart, daß aus einem Rahmen eine feste Zahl von Unterrahmen entstehen, die jeweils die Daten einer vorgegebenen Zahl von Paketen in Form von Sub-Paketen mit einer festen Zahl von Paketteilen enthalten. Die Rahmenumwandlungseinheit erkennt ein ankommenes STM-Paket an seiner Kopfmarke (header) oder einem anderen Kriterium und sortiert bei der Umwandlung Paketteile des STM-Pakets entsprechend einer vorgegebenen Vorschrift an bestimmten Plätzen (Zeitschlitzen) in Sub-Pakete der Unterrahmen ein. Die Unterrahmen werden nun über einen Koppelnetzeingang KE in einen nachgeschalteten Koppelnetzbaustein K eingegeben. Der Koppelnetzbaustein enthält gemäß Fig. 2 ein Synchron-Koppelelement CS für synchrone Vermittlung und ein für Paketvermittlung ausgelegtes Asynchron-Koppelelement PS. Beiden, von einer Steuereinheit S gesteuerten Koppelelementen sind eine Anzahl von Demultiplexern DM vorgeschaltet, die jeweils Daten an beide Koppelelemente ausgeben können.

Im Demultiplexer wird der Eingangsdatenstrom zunächst synchronisiert und byteweise von seriell in parallel umgewandelt. Da jeder Unterrahmen eine feste Anzahl von Paketen, in Sub-Pakete aufgeteilt, enthält, kennt der Demultiplexer die Bitplätze im Unterrahmen, an denen sich die Unterscheidungsbits der im Unterrahmen enthaltenen Pakete befinden und kann prüfen, ob ein durch ein solches Bit gekennzeichnetes Paket ein synchron zu vermittelndes oder ein asynchron zu vermittelndes Paket ist.

Für den Fall, daß das Unterscheidungsbit ein synchron zu vermittelndes Paket ankündigt, enthält der Demultiplexer eine Tabelle, in der Zeitschlitze (Byteplätze) der Sub-Pakete definiert sind, in denen sich Paketteile des synchron zu vermittelnden Paketes befinden. Ist beispielsweise nach einer vorgegebenen Vorschrift ein bestimmter Zeitschlitz in jedem Sub-Paket für synchrone Vermittlung reserviert, so werden die in den entsprechenden Zeitschlitzen befindlichen Daten in so vielen aufeinanderfolgenden Sub-Paketen auf das Synchron-Koppelelement ausgegeben, wie Zeitschlitze gebraucht werden, um das vollständige Paket zu übertragen. In den darauffolgenden Sub-Paketen ist der zuvor reservierte Zeitschlitz wieder für asynchrone Vermittlung verfügbar, wenn nicht ein weiteres synchron zu vermittelndes Paket ansteht.

Um dem Synchron-Koppelelement und dem ausgangsseitigen Multiplexer die Ausgabe eines synchron zu vermittelnden Pakets mitzuteilen, enthält der Koppelnetzbaustein eine besondere Steuerleitung SL, die vom Demultiplexer vor Ausgabe eines synchron zu vermittelnden Pakets für eine zur Übertragung einer Paketlänge erforderliche Zeit auf ein vorgegebenes Steuerpotential gelegt wird. Der ausgangsseitige Multiplexer M reserviert dann einen der Vorschrift entsprechenden Zeitschlitz für so viele Sub-Pakete eines Unterrahmens, wie zur Übertragung eines Pakets mittels der gemäß Vorschrift reservierbaren Zeitschlitze erforderlich sind und ordnet in diese Zeitschlitze jeweils vom Synchron-Koppelelement augegebene Paketteile ein. Damit liegen in dem vom Multiplexer wieder von parallel in seriell zu wandelnden Datenstrom die synchron zu übertragenden Paketteile in richtiger Reihenfolge und ohne Laufzeitschwankungen vor. Nach Abarbeitung der zur Übertragung eines synchron zu vermittelnden Paketes benötigten Anzahl von Sub-Paketen steht die gesamte Kapazität der Übertragungsstrecke wieder für Asynchronvermittlung zur Verfügung.

## Patentansprüche

1. Hybrider Koppelnetzbaustein mit einem Synchron-Koppelelement (CS), einem Asynchron-Koppelelement (PS), einer mit beiden Koppelelementen verbunden Steuereinheit (S), mit den Koppelelementen vorgeschalteten Demultiplexern (DM), denen in Unterrahmen angeordnete, untereinander gleichlange Teile synchron oder asynchron zu vermittelnder Pakete von Eingangssortierern (ES) zugeführt werden, und mit den Koppelelementen nachgeschalteten Multiplexern (M), welche Paketteile nach Durchgang durch die Koppelelemente aufnehmen und in Unterrahmen in Sub-Paketen geordnet an einen nachgeschalteten Koppelnetzbaustein oder einen Ausgangssortierer (AS) ausgeben, und mit einer jedem Demultiplexer und jedem Multiplexer zugeordneten Tabelle, in welcher vorgegebene Zeitschlitze der Sub-Pakete der Unterrahmen als für Paketteile synchron zu vermittelnder Pakete reserviert markiert werden können, was zur Folge hat, daß der in einem markierten Zeitschlitz befindliche Paketteil vom jeweiligen Demultiplexer dem Synchron-Koppelelement zugeführt, von diesem in synchroner Zeitvielfachtechnik vermittelt und von dem das Vermittlungsziel bildenden Multiplexer an der markierten Stelle wieder in den Unterrahmen eingefügt wird,
**dadurch gekennzeichnet,** daß den Demultiplexern (DM) eine Erkennungslogik zugeordnet ist, die einen ersten Paketteil eines ankommenden, synchron zu vermittelnden Pakets erkennt, daraufhin sowohl die Markierung der vorgegebenen Zeitschlitze in einer für die Vermittlung des Paketes erforderlichen Anzahl aufeinanderfolgender Sub-Pakete eines Unterrahmens, als auch die Aufhebung dieser Markierung nach Abarbeitung der erforderlichen Anzahl von Sub-Paketen veranlaßt, und daß zur Signalisierung einer wirksamen Markierung je eine Steuerleitung (SL) zwischen Demultiplexer (DM) und Synchron-Koppelelement (CS) und zwischen Synchron-Koppelelement (CS) und Multiplexer (M) vorgesehen ist.
